# FASCICULE DE BREVET EUROPEEN

(11) **EP 0 586 982 B1**
(45) Date de publication et mention de la délivrance du brevet: **08.07.1998**
(21) Numéro de dépôt: 93113710.3
(22) Date de dépôt: 27.08.1993
(51) Int. Cl.: G01N 27/49

(54) **Dispositif de mesure ampérométrique comportant un capteur électrochimique**
Amperometrisches Messgerät mit einem elektrochemischen Sensor
Amperometric measuring system with an electrochemical sensor

(30) Priorité: 07.09.1992 FR 9210740
(43) Date de publication de la demande: 16.03.1994
(73) Titulaire: GIE CYLERGIE, F-92000 Nanterre (FR)
(72) Inventeur: Van den Berg, Albert, CH-2000 Neuchâtel (CH); Grisel, Alain, CH-1012 Lausanne (CH); Archenault, Martial, F-69003 Lyon (FR)
(74) Mandataire: Caron, Gérard

(56) Documents cités:
- EP-A- 0 299 779
- EP-A- 0 299 780
- EP-A- 0 328 640
- WO-A-88/09500
- US-A- 4 571 292
- US-A- 4 948 490

## Description

La présente invention est relative à un dispositif capteur ampérométrique dont le capteur forme une cellule électrochimique miniature et qui est destiné à détecter ou à mesurer la teneur d'une substance oxydoréductible dans un liquide.

De tels dispositifs capteurs sont utilisés notamment, bien que non exclusivement, pour mesurer la teneur en chlore de l'eau potable.

Un capteur utilisé dans ce but et son mécanisme de fonctionnement sont décrits dans un article de A.v.d.Berg et al., paru dans la revue "Transducers" 1991 - International Conference on Solid State Sensors and Actuators, page 233.

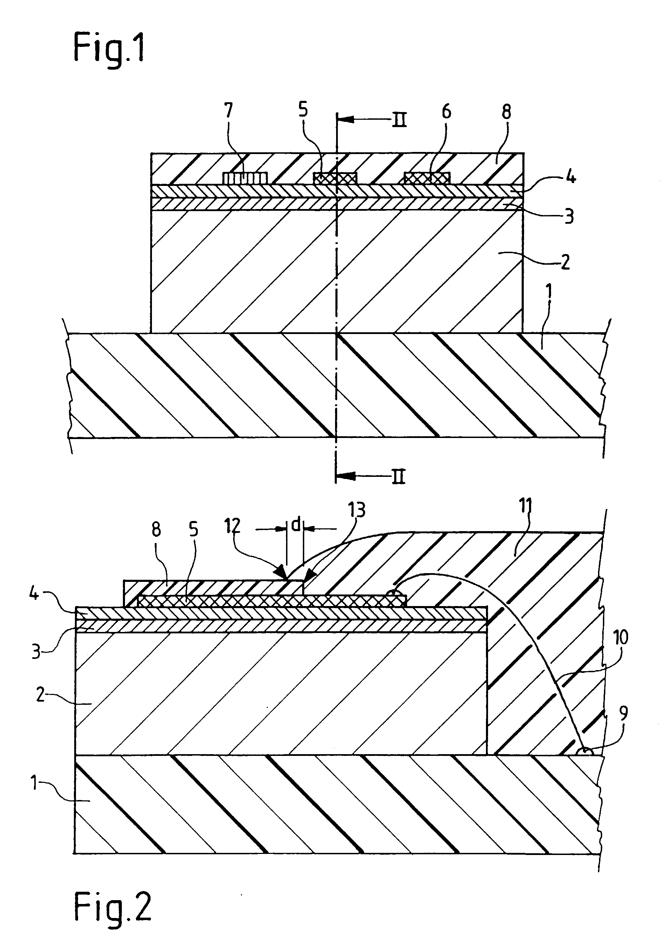

La construction du capteur décrit dans cet article est représentée aux figures 1 et 2 des dessins annexés.

Sur une plaquette de circuit imprimé 1 est fixé un substrat 2 en silicium découpé après des traitements photolithographiques appropriées d'une plaquette de silicium à l'image des techniques employées pour la fabrication des circuits intégrés et analogues.

Le substrat 2 est revêtu d'une couche 3 d'oxyde de silicium (Si0₂) sur laquelle est déposée une couche 4 d'un isolant tel que l'oxyde d'aluminium (Al₂0₃).

Le capteur connu comprend également trois électrodes 5, 6 et 7 formant respectivement une électrode de travail, une contre-électrode et une électrode de référence qui sont réalisées sous la forme de rubans déposés, également par de techniques photolithographiques, sur la couche d'isolant 4.

Les électrodes 5, 6 et 7 sont ensuite recouvertes d'une membrane de diffusion 8 formée par une matière organique telle que l'hydrogel poly HEMA ou analogue (voir l'article précité). Cette membrane, déposée et polymérisée de préférence par des techniques photolithographiques, est destinée à garantir une mise en contact uniforme et sans turbulences du fluide à analyser avec les électrodes.

Celles-ci sont reliées individuellement à des contacts 9 prévus sur le circuit imprimé 1, au moyen de fils soudés 10, une encapsulation 11 étant ensuite placée sur l'ensemble pour le protéger vis-à-vis du liquide à analyser, à l'exception, bien entendu, d'une partie de la membrane de diffusion 8 et, par conséquent des électrodes 5, 6 et 7, afin que le fonctionnement électrochimique puisse avoir lieu.

Il est à noter que, dans le cas où il s'agit de mesurer la teneur en chlore dans l'eau, les électrodes 5 et 6 sont réalisées en platine et que l'électrode de référence 7 est en argent revêtue d'une faible couche de chlorure d'argent (AgCl).

Le dispositif capteur ampérométrique comportant ce capteur combiné à un circuit dit "potentiostat", qui est connecté à ce dernier, permet d'évaluer la teneur en substance oxydoréductible dans un liquide (par exemple la teneur en chlore dans l'eau) en mesurant le courant électrique généré à l'électrode de travail 5 du capteur.

Le capteur ainsi conçu, bien que fonctionnant de façon satisfaisante sur le plan du principe, présente certains inconvénients.

En effet, si les dimensions des électrodes (qui ont une longueur de quelques millimètres seulement et une largeur de l'ordre du dixième de millimètre) peuvent être déterminées avec une bonne précision grâce aux techniques photolithographiques, il n'en est pas de même de celles de l'encapsulation 11. Comme cette encapsulation 11 doit isoler les parties conductrices non-actives des électrodes 5, 6 et 7 du liquide à analyser, elle doit de préférence déborder légèrement sur la couche d'hydrogel constituant la membrane de diffusion 8. Dans l'exemple représenté, la zone de débordement est indiqué par la distance d et présente un bord avant 12 dont la localisation exacte par rapport à la membrane de diffusion est difficilement maîtrisable avec précision. En d'autres termes, la distance d peut varier dans des proportions importantes d'un capteur à l'autre. Or, cette distance détermine en définitive l'aire de la zone exposée au liquide et donc la surface de mesure active à laquelle le courant électrochimique est engendré, si bien que l'intensité de ce courant, toutes choses égales par ailleurs, différera d'un capteur à l'autre.

Par ailleurs, pour pouvoir engendrer un courant électrochimique appréciable, on souhaite que cette surface active soit aussi grande que possible pour des dimensions données d'un capteur. Dans ces conditions, le bord avant 12 de l'encapsulation doit se trouver le plus près possible du bord arrière 13 de la membrane 8. Mais alors, il se peut que le liquide à analyser fuie sous ce bord et provoque la production de courants de fuite entre les parties des rubans des électrodes situées en arrière de la membrane 8 et ne devant donc normalement pas participer à la production du courant électrochimique de mesure.

Enfin, l'inconvénient le plus important du dispositif antérieur est que l'aire de la surface active de l'électrode de travail ne peut être déterminée avec précision de sorte que l'étalonnage précis de chaque capteur est nécessaire et que l'interface entre la membrane et l'encapsulation est une source de perturbations.

L'invention a pour but de remédier aux inconvénients du dispositif capteur décrit dans l'article précité.

Elle a donc pour objet un dispositif capteur ampérométrique, pour la mesure de la teneur d'une substance oxydoréductible dans un liquide, comprenant en combinaison un capteur ayant une structure planaire obtenue par des techniques photolithographiques et un circuit de mesure pour mesurer l'intensité du courant électrochimique engendré par ledit capteur, ladite structure comprenant
- un substrat isolant
- un jeu d'électrodes composé d'au moins une électrode de travail, d'une contre-électrode et d'une électrode de référence, au moins ladite électrode de travail étant configurée sur ledit substrat isolant,
- une membrane de diffusion déposée sur au moins une partie dudit substrat, et
- des moyens de connexion pour relier les électrodes audit circuit de mesure,
ledit dispositif capteur ampérométrique étant caractérisé en ce que
- ladite membrane de diffusion recouvre entièrement et uniquement la partie conductrice active de ladite électrode de travail en débordant par toute sa zone périphérique, et
- en ce que ladite membrane de diffusion, ladite électrode de référence et ladite contre-électrode sont entièrement exposées pour qu'au cours du fonctionnement dudit dispositif, elles soient en contact par toute leur surface avec le liquide à analyser.

Il résulte de ces caractéristiques que l'aire de la surface active de l'électrode de travail est uniquement définie par l'aire de sa partie conductrice à la surface du substrat, aire dont les dimensions sont déterminables avec une grande précision du fait qu'elles sont définies au cours du procédé de photolithographie mis en oeuvre pour créer l'électrode à la surface du substrat.

Comme par ailleurs la membrane de diffusion déborde de l'électrode de travail par toute sa zone périphérique, toute quantité de courant électrochimique engendrée à la surface de l'électrode de travail peut être prise en compte pour la mesure à l'exclusion de tout courant de fuite.

Suivant une autre caractéristique importante de l'invention, lesdits moyens de connexion comportent au moins un conducteur relié à ladite électrode de travail et passant dans ladite structure à un niveau sous-jacent à la surface active de celle-ci, en s'étendant au moins au-delà de la périphérie de ladite membrane de diffusion.

Cette caractéristique permet également d'éviter que des parties conductrices du capteur autres que celles formant son électrode de travail ne participent à la production du courant électrochimique, les organes de connexion menant à partir de la périphérie de la membrane de diffusion vers les bornes de connexion du capteur pouvant facilement être recouverts par l'encapsulation qui, dans ce cas, ne pourra pas influencer l'étendue de la surface active du capteur.

D'autres caractéristiques et avantages de l'invention apparaîtront au cours de la description qui va suivre, donnée uniquement à titre d'exemple et faite en se référant aux dessins annexés sur lesquels :
- la figure 1 est une vue en coupe schématique d'un dispositif capteur ampérométrique réalisé selon la technique antérieure;
- la figure 2 est une vue en coupe prise selon la ligne II - II de la figure 1;
- la figure 3 est une vue en plan d'un capteur ampérométrique combiné à un circuit de mesure pour former le dispositif capteur selon l'invention;
- la figure 4 est une vue en coupe schématique prise selon la ligne IV - IV de la figure 3;
- les figures 5, 6 et 7 sont des vues schématiques en plan de trois autres configurations du capteur pouvant être utilisé dans le dispositif capteur suivant l'invention;
- la figure 8 montre une vue schématique en coupe axiale d'un capteur selon un montage pratique;
- la figure 9 est une vue, à plus grande échelle que celle de la figure 8, du capteur utilisé dans le dispositif de la figure 8, la vue étant prise selon la ligne IX - IX de celle-ci;
- la figure 10 montre un mode d'utilisation du capteur des figures 8 et 9; et
- la figure 11 montre une autre application du dispositif capteur selon l'invention.

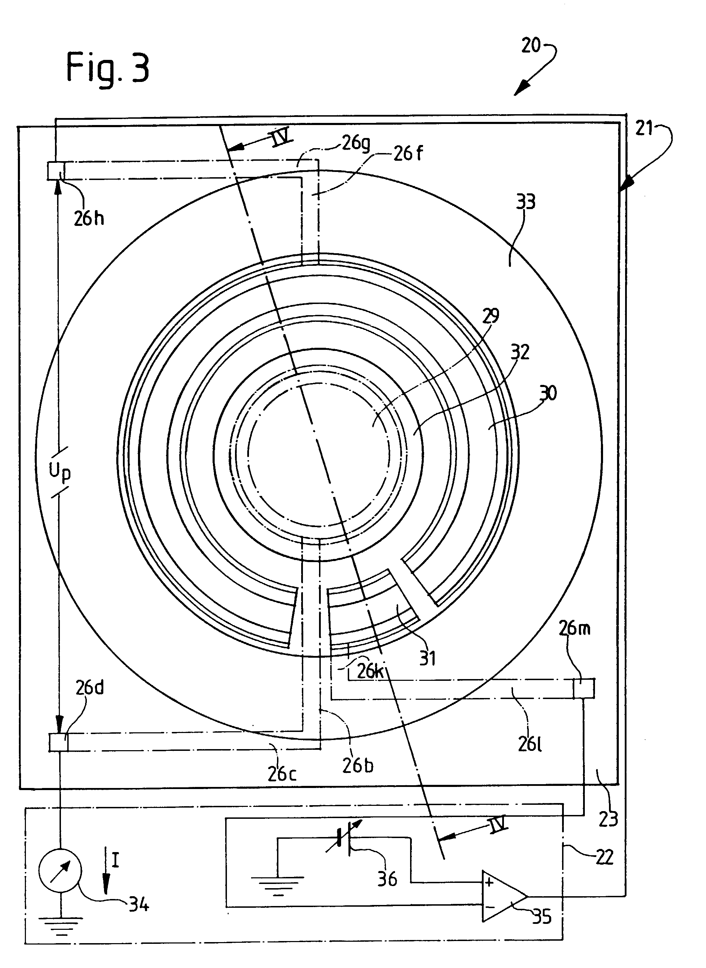

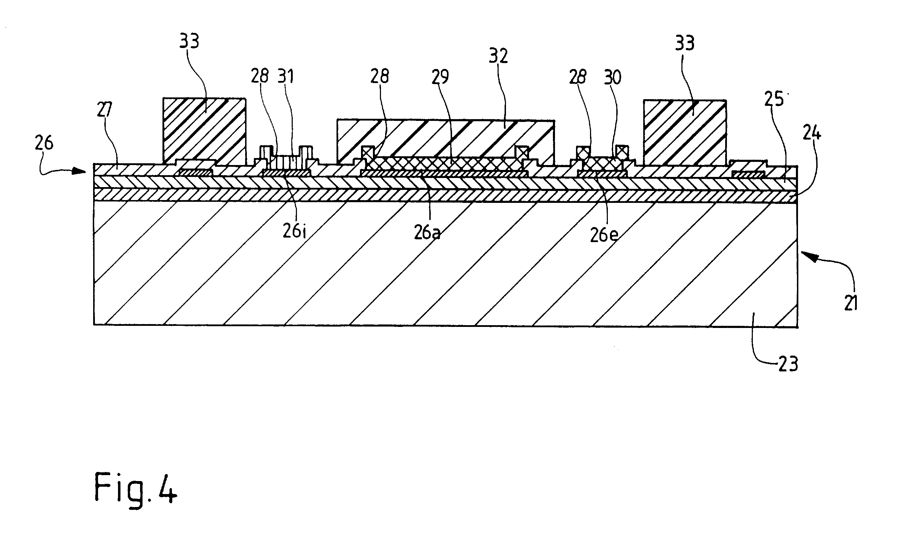

On va maintenant se référer aux figures 3 et 4 qui représentent un dispositif capteur ampérométrique 20 conçu selon le mode de réalisation préféré de l'invention. Ce dispositif comprend tout d'abord le capteur proprement dit 21 ainsi qu'un circuit de mesure 22 qui est représenté sur la figure 3 selon un schéma extrêmement simplifié. La figure 4 est une vue en coupe du capteur 21 sur laquelle les épaisseurs des diverses couches ne sont pas représentées avec leurs proportions exactes afin d'améliorer la clarté de la représentation.

Le capteur 21 comporte un substrat 23, en silicium par exemple, découpé, après les traitements photolithographiques appropriés, d'une plaquette de silicium à la façon habituelle dans la technique de fabrication des composants semi-conducteurs. Le substrat 23 est recouvert d'une couche d'isolant 24, réalisé de préférence en oxyde de silicium (SiO₂). Cette couche est recouverte à son tour par une autre couche d'isolant 25, en nitrure de silicium (Si₃N₄) par exemple, couche sur laquelle est apportée une configuration de connexions 26 formant une partie des moyens de connexion reliant le capteur proprement dit 21 au circuit de mesure 22. La configuration de connexions 26 est réalisée sous la forme de plusieurs pistes en polysilicium dont la forme va être décrite par la suite. Elle est recouverte par une troisième couche d'isolant 27 réalisée de préférence en nitrure de silicium (Si₃N₄), et dans laquelle sont pratiquées plusieurs ouvertures 28, la configuration de connexion étant donc sous-jacente à la surface supérieure du capteur. Chacune de ces ouvertures 28 présente une forme déterminée et elle reçoit un dépôt de métal destiné à constituer une électrode du capteur 21.

Ainsi, un premier de ces dépôts forme l'électrode de travail 29 du capteur, réalisée de préférence en platine. Dans l'exemple représenté, cette électrode de travail 29 est de forme circulaire et se trouve au centre de la plaquette au-dessus d'une zone de contact 26a en polysilicium de la configuration de connexion 26. Comme représenté sur la figure 3, la zone de contact 26a est reliée à un ruban en polysilicium composé des branches 26b et 26c, la branche 26c se terminant par une borne de connexion 26d apparaissant à la surface supérieure de la troisième couche d'isolant 27.

Un second dépôt de métal, également en platine de préférence, constitue la contre-électrode 30 du capteur 21. Comme on le voit également sur la figure 3, cette contre-électrode est, dans cet exemple, de forme arquée et s'étend pratiquement tout autour de l'électrode de travail 29 au-dessus d'une zone de contact en polysilicium 26e qui est en contact d'un ruban conducteur en polysilicium dont les branches 26f et 26g mènent à un contact de connexion 26h apparaissant également à la surface supérieure de la couche d'isolant 27.

Enfin, un troisième dépôt métallique, en argent recouvert d'une très mince couche de chlorure d'argent (AgCl), remplit la troisième ouverture pratiquée dans la couche d'isolant 27 et constitue l'électrode de référence 31 du capteur 21. L'électrode de référence est située audessus d'une zone de contact 26i en polysilicium qui est connectée à un ruban de contact en polysilicium également, composée de deux branches 26k et 261 menant à un contact de connexion 26m apparaissant à la surface supérieure de la couche d'isolant 27.

L'électrode de travail 29 est recouverte d'une membrane de diffusion 32 constituée par un hydrogel fait de préférence en poly-hydroxyéthyle-métacrylate (polyHEMA). Le rôle de cette membrane a été décrit en détail dans l'article précité. Elle a essentiellement pour but d'éviter les turbulences du liquide à analyser au-dessus de l'électrode de travail 29 et elle permet également d'éviter aux salissures de s'y déposer à partir du liquide à mesurer. Le corps chimique que l'on vient d'indiquer pour la membrane n'est qu'un exemple possible, toute autre substance remplissant le même rôle pouvant être utilisée. Toutefois, il est avantageux que la substance puisse être déposée à l'aide des techniques photolithographiques classiques et être polymérisée par insolation, ce qui est le cas du poly-HEMA.

On notera que, selon une caractéristique essentielle de l'invention, la membrane de diffusion 32 couvre entièrement l'électrode de travail 29 et qu'elle déborde même de la périphérie extérieure de cette électrode ce qui permet de définir avec précision l'aire de la surface active de cette électrode. Par ailleurs, on verra par la suite que, lorsque le dispositif capteur selon l'invention est utilisé, la membrane 32 est exposée au liquide à analyser par la totalité de sa surface découverte.

Les figures 3 et 4 montrent également qu'à la disposition que l'on vient de décrire peut être adjointe une garniture d'étanchéité 33 fixée autour de l'agencement des électrodes du capteur, sur la surface supérieure de la couche d'isolant 27, cette garniture pouvant être formée par un polysiloxane, par exemple.

En se référant plus particulièrement à la figure 3, on voit que le capteur 21 est raccordé au circuit de mesure 22 qui forme un montage dit "potentiostat" (la figure 3 en montre un schéma très simplifié). L'électrode de travail 29 est connectée, par l'intermédiaire du contact 26d, à un instrument 34 de mesure de courant qui est par ailleurs raccordé à la masse. L'électrode de référence 31 est raccordée, par l'intermédiaire du contact 26m, à l'entrée inverseuse d'un amplificateur opérationnel 35 dont l'entrée directe est connectée à une source de tension réglable 36 raccordée par ailleurs à la masse. Cette source 36 permet de régler la tension de polarisation Uₚ présente entre la contre-électrode 30 et l'électrode de travail 29.

Ainsi, le capteur 21 constitue une micro-cellule électrochimique, la réaction électrochimique avec le fluide à analyser du fait de la présence de la substance oxydoréductible provoquant la production d'un courant électrochimique I qui est mesurable par l'instrument de mesure 34.

Le dispositif capteur ampérométrique que l'on vient de décrire est particulièrement approprié pour la mesure de la teneur en chlore de l'eau potable, mais il est bien entendu qu'en choisissant convenablement les métaux des électrodes du capteur et la tension de polarisation appliquée à l'électrode de travail, l'on pourrait, en partant du même concept inventif, réaliser des dispositifs capteurs capables de détecter dans l'eau ou dans d'autres liquides que l'eau, d'autres substances que le chlore.

La figure 4 fait apparaître clairement la disposition essentiellement circulaire des électrodes 29, 30 et 31. Cette disposition est très avantageuse en ce qu'elle conduit à la meilleure occupation de la surface du substrat 23 pour une surface maximale de l'électrode de travail 29 dont l'aire détermine essentiellement l'intensité du courant de mesure.

Cependant, les spécialistes dans la technique concernée comprendront que la configuration obtenue par photolithographie sur le substrat 23 peut être différente de celle représentée aux figures 3 et 4, pourvu bien entendu que les caractéristiques essentielles de l'invention soient respectées à savoir, d'une part, la couverture complète par la membrane de diffusion 32 de l'électrode de travail 29 et, d'autre part, l'exposition totale de la membrane de diffusion 32 au liquide à analyser.

A titre indicatif seulement, les dimensions et épaisseurs suivantes sont appropriées pour la réalisation du dispositif capteur que l'on vient de décrire

| | |
|---|---|
| Dimensions du substrat 23 | 4 mm x 4,4 mm |
| Surface de l'électrode de travail | 1,54 mm2 |
| Surface de la contre-électrode | 1,37 mm2 |
| Surface de l'électrode de référence | 0,16 mm2 |
| Epaisseur du substrat 23 | 380 µ |
| Epaisseur de la couche d'isolant 24 | 6000 Å |
| Epaisseur de la couche d'isolant 25 | 2000 Å |
| Epaisseur de la couche d'isolant 27 | 2000 Å |
| Epaisseur des pistes conductrices en polysilicium formant les moyens de connexion des électrodes | 1500 Å |
| Epaisseur des électrodes | 3000 Å |
| Epaisseur de la membrane de diffusion | 50 µ |
| Epaisseur de la barrière en polysiloxane | 200 µ. |

Les figures 3 et 4 font également apparaître que seules les surfaces de la membrane, de la contre-électrode et de l'électrode de référence, utiles pour la mesure sont en contact avec le liquide à analyser, à l'exclusion de tous les autres moyens de connexion qui assurent la liaison des électrodes avec le circuit de mesure 22. En effet, comme on le verra par la suite, grâce à la présence de la garniture d'étanchéité 33, il est facilement possible de rendre étanche la zone de mesure (c'est-à-dire la zone dans laquelle se trouvent les électrodes), de l'espace au-dessus du reste du substrat 23, et notamment celui dans lequel se trouvent les contacts apparents 26d, 26m et 26h qui sont utilisés pour réaliser la connexion électrique du capteur 21 avec le circuit de mesure 22. Ainsi, aucun élément conducteur ne peut venir perturber la mesure par des courants de fuite ou par d'autres causes perturbatrices, comme cela était le cas dans les dispositifs de la technique antérieure.

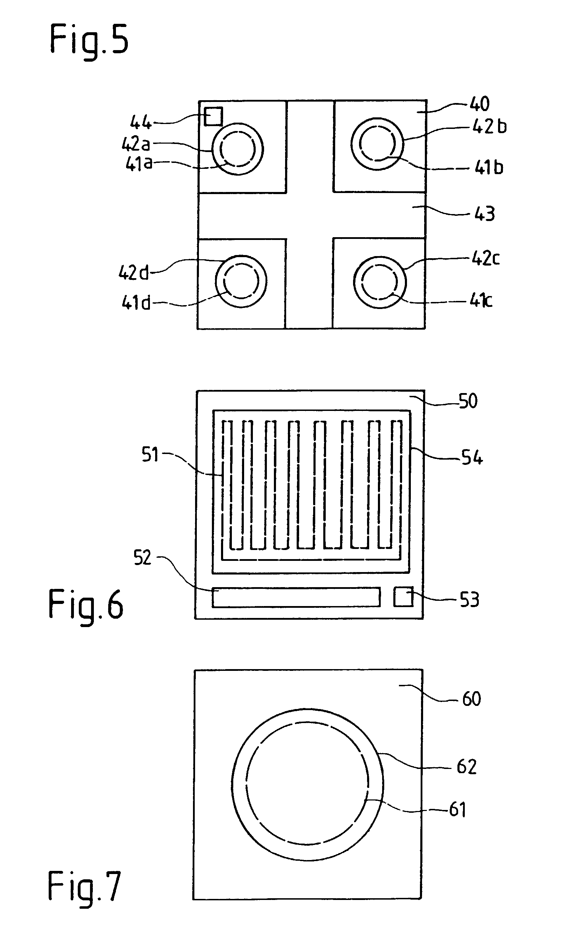

Les figures 5, 6 et 7 représentent trois exemples différents de configurations d'électrodes pouvant être utilisées sur le substrat du capteur ampérométrique.

Sur la figure 5, un substrat 40 comporte quatre électrodes élémentaires de travail 41a à 41d disposées aux quatre coins de la surface du substrat et recouvertes chacune par une membrane élémentaire de diffusion 42a à 42d. Une contre-électrode 43 en forme de croix est également présente sur le substrat de même qu'une électrode de référence 44 qui est placée près de l'un des angles du substrat. La technique de fabrication d'un tel capteur est très analogue à celle à l'aide de laquelle est réalisé le capteur représenté sur les figures 3 et 4 et on n'y reviendra donc pas de nouveau.

On peut noter simplement que dans cette variante de l'invention, chaque membrane élémentaire 42a à 42d est agencée de la même façon et joue le même rôle que la membrane de diffusion 32 des figures 3 et 4 de sorte que les même résultats favorables inhérents à l'invention sont obtenus ici.

Sur la figure 6, un substrat 50 présente une électrode de travail 51 en forme de peigne dont les dents s'étendent parallèlement les unes aux autres vers l'un des bords du substrat et à laquelle est contiguë une contreélectrode 52 qui s'étend le long du bord opposé du substrat 50. Une électrode de référence 53 est prévue près de l'un des angles de celui-ci. L'électrode de travail 51 en forme de peigne est recouverte d'une membrane de diffusion 54.

Sur la figure 7, on a représenté une autre variante dans laquelle il est supposé que la contre-électrode et l'électrode de référence sont physiquement séparées du substrat 60 sur lequel on n'a prévu qu'une électrode de travail 61 réalisée de la même façon que celle des figures 3 et 4. Une membrane de diffusion 62 recouvre l'électrode 61 en débordant légèrement de sa périphérie extérieure.

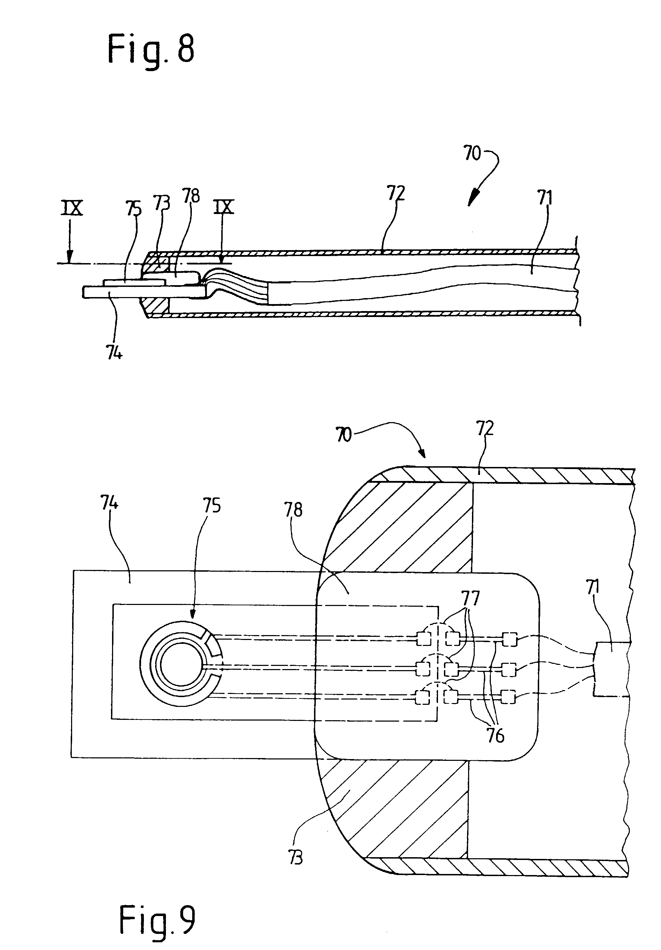

Les figures 8 et 9 montrent une première application pratique du dispositif capteur ampérométrique selon l'invention.

Il s'agit, comme représenté sur la figure 8, d'un stylet 70 pouvant être raccordé par un câble 71 à un boîtier (non représenté) comportant le circuit de mesure, cet ensemble pouvant être utilisé pour mesurer ponctuellement la teneur en gaz d'un liquide. Un tel ensemble pourrait être rendu portable et facilement maniable pour être utilisé lors de la vérification de la teneur en chlore de l'eau d'une piscine par exemple.

Plus précisément, un petit tuyau 72, formant blindage et réalisé par exemple en aluminium, comporte à l'une des ses extrémités un bouchon 73 dans lequel est monté un support 74. Sur ce support est fixé un capteur 75 du type de celui représenté en 21 sur les figures 3 et 4. Comme représenté à la figure 9, le support 74 est un circuit imprimé comportant trois pistes de connexion 76 qui, par l'intermédiaire de fils soudés 77 sont respectivement reliés aux trois électrodes du capteur.

Comme on peut le constater, dans ce cas, la garniture d'étanchéité 33 des figures 3 et 4 est remplacée par un bourrelet 78 en une matière isolante qui est placé sur le substrat du capteur 75, les électrodes du capteur et en particulier l'électrode de travail recouverte de sa membrane de diffusion étant exposée au fluide à analyser lorsque le stylet 70 y est plongé. En revanche, tous les autres organes conducteurs, et notamment les contacts de connexion assurant le couplage avec le circuit de mesure sont ici recouverts par le bourrelet 78.

Le tuyau d'aluminium 72 est traversé par le câble 71 qui est une connexion trifilaire établissant la liaison entre le support 74 et le circuit de mesure (non représenté sur ces figures).

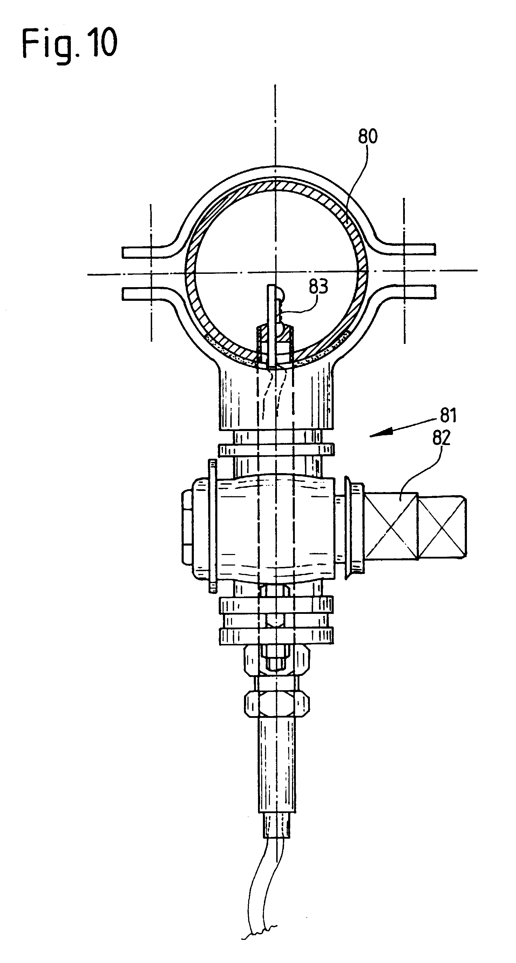

La figure 10 montre une autre façon d'utiliser le dispositif capteur ampérométrique suivant l'invention, à des fins de contrôle continu de la teneur en substance oxydoréductible dans un liquide en circulation dans une tuyauterie 80. Sur cette tuyauterie 80 est fixé un support 81 comprenant un robinet 82 à travers lequel l'on peut mettre en place un dispositif capteur ampèrométrique du type
représenté sur les figures 8 et 9. Le dispositif de mesure peut facilement être mis en place dans la tuyauterie ou en être ôté en agissant sur le robinet 82, sans que le liquide ne s'échappe de la tuyauterie.

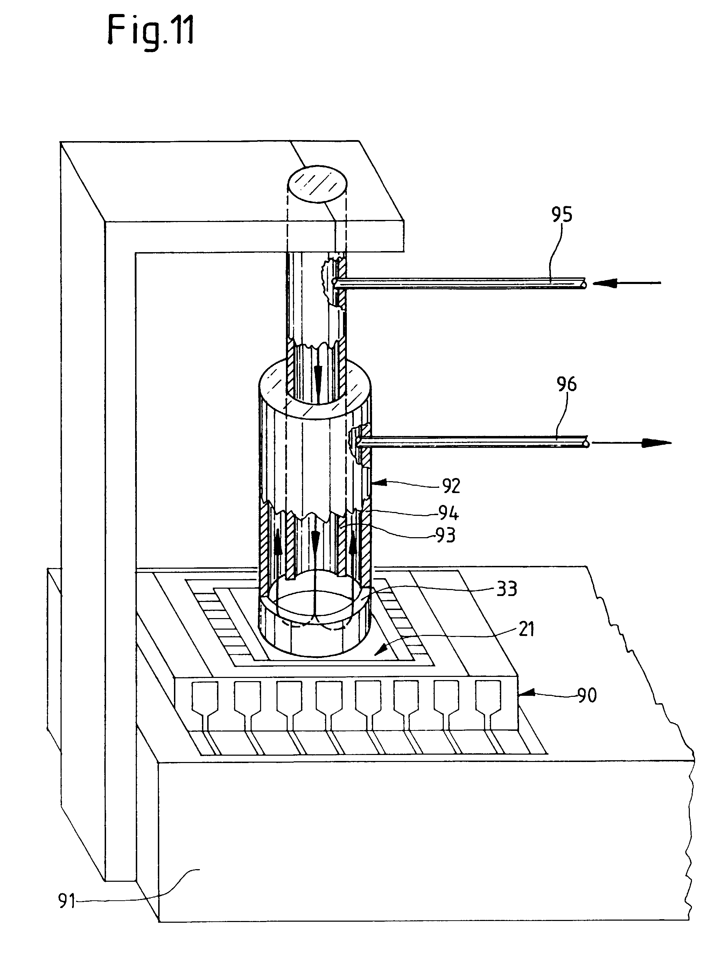

La figure 11 montre une autre façon d'utiliser le dispositif capteur suivant l'invention. Dans ce cas, on a encapsulé son capteur dont la construction est identique à celle des figures 3 et 4, dans un boîtier normalisé 90 du type DIL à seize broches utilisé habituellement pour les composants de circuit intégré. Le boîtier 90 est placé, par exemple sur un support en forme de potence 91 auquel est fixé un ajutage cylindrique 92 à deux canalisations concentriques 93 et 94 auxquelles sont respectivement branchées deux tubulures 95 et 96 destinées à être connectées à des tuyaux d'entrée et de sortie (non représentés) du liquide à analyser.

Comme on peut le constater sur la figure 11, la canalisation externe 94 est en appui sur la garniture d'étanchéité 33 qui entoure la partie active du capteur 21, tandis que l'extrémité de la canalisation interne 93 est légèrement en retrait par rapport à la surface active de la membrane de diffusion.

Ainsi, le liquide à analyser peut s'écouler en continu de la tubulure d'entrée 95, à travers la canalisation interne 93, à travers la chambre ménagée au-dessus de la membrane de diffusion, et à travers la canalisation externe 94 vers la tubulure de sortie 96. Le dispositif ampèrométrique suivant l'invention peut donc délivrer dans ces conditions un signal permanent qui est une fonction directe de la teneur en substance oxydoréductible dans le liquide à analyser. Bien entendu, le signal en question peut être exploité de toute manière appropriée, par exemple servir pour déclencher un avertissement, lorsque la teneur en substance oxydoréductible dépasse une valeur autorisée, pour servir de valeur réelle dans une boucle de réglage destinée à commander la teneur en substance oxydoréductible en fonction de l'écart de cette valeur par rapport à une valeur de consigne etc.

## Revendications

1. Dispositif capteur ampérométrique, pour la mesure de la teneur d'une substance oxydoréductible dans un liquide, comprenant en combinaison un capteur (21) ayant une structure planaire obtenue par des techniques photolithographiques et un circuit (22) pour mesurer l'intensité du courant électrochimique engendré par ledit capteur (21), ladite structure comprenant
- un substrat isolant (23 à 25),
- un jeu d'électrodes composé d'une électrode de travail (29) , d'une contre-électrode (30) et d'une électrode de référence (31), au moins ladite électrode de travail (29) étant configurée sur ledit substrat isolant (23 à 25),
- une membrane de diffusion (32) déposée sur une partie dudit substrat (23 à 25), et
- des moyens de connexion (26) pour relier lesdites électrodes (29,30,31) audit circuit de mesure (22),
ledit dispositif capteur ampérométrique étant caractérisé en ce que
- ladite membrane de diffusion recouvre entièrement et uniquement la partie conductrice active de ladite électrode de travail (29) en débordant par toute sa zone périphérique, et
- en ce que ladite membrane de diffusion (32), ladite électrode de référence (31) et ladite contre-électrode (30) sont entièrement exposées pour qu'au cours du fonctionnement dudit dispositif (20), elles soient en contact par toute leur surface avec le liquide à analyser.

2. Dispositif ampérométrique suivant la revendication 1, caractérisé en ce que lesdits moyens de connexion (26) comportent au moins un conducteur (26a, 26b) relié à ladite électrode de travail (29) et passant dans ledit substrat isolant à un niveau sous-jacent à la surface active de celle-ci, en s'étendant au moins au-delà de la périphérie de ladite membrane de diffusion (32).

3. Dispositif ampérométrique suivant l'une des revendications 1 et 2, caractérisé en ce que l'électrode de travail (29) a une forme essentiellement circulaire.

4. Dispositif ampérométrique suivant la revendication 3, caractérisé en ce que ladite contreélectrode (30) et/ou ladite électrode de référence (31) sont de forme arquée et placée concentriquement autour de l'électrode de travail (29).

5. Dispositif ampérométrique suivant l'une quelconque des revendications précédentes, caractérisé en ce que ledit jeu d'électrodes (29, 30, 31) est entouré d'une garniture d'étanchéité (33) fixée sur ledit substrat, et en ce que lesdits moyens de connexion comprennent des contacts (26d, 26h, 26m) de liaison avec ledit circuit de mesure (22) situés à l'extérieur du périmètre de ladite garniture d'étanchéité (33) à la surface dudit substrat (23).

6. Dispositif ampérométrique suivant l'une quelconque des revendications 1 à 5, caractérisé en ce que ledit capteur (75) est monté sur un circuit imprimé (74) monté à son tour dans un tube métallique (72) formant blindage et traversé par une partie (71) des moyens de connexion.

7. Dispositif ampérométrique suivant l'une quelconque des revendications 1 à 5, caractérisé en ce que ledit capteur (21) est logé dans un boîtier (90) ayant la forme d'un boîtier d'encapsulation normalisé pour circuits intégrés.

8. Dispositif ampérométrique suivant l'une des revendications 1 à 5, et 7, caractérisé en ce qu'il comprend un ajutage cylindrique (92) à deux canalisations concentriques (93, 94) destinées respectivement à communiquer avec une entrée et une sortie de liquide à analyser, et en ce qu' il comprend également un support (90) agencé pour maintenir ledit ajutage (92) en appui sur ladite garniture d'étanchéité (33) par l'une des extrémités de sa canalisation externe (94).

9. Dispositif ampérométrique suivant l'une quelconque des revendications précédentes, caractérisé en ce que ladite électrode de travail comporte plusieurs éléments (41a à 41d) répartis sur ledit substrat (40) et en ce que ladite membrane de diffusion comporte plusieurs éléments (42a à 42d) recouvrant respectivement les éléments (41a à 41d) de ladite électrode de travail en débordant individuellement par rapport à ces éléments d'électrode.

10. Dispositif ampérométrique suivant l'une quelconque des revendications précédentes, caractérisé en ce que ladite électrode de travail (51) est en forme de peigne.

## Patentansprüche

1. Amperometrische Meßeinrichtung zur Messung des Gehalts an einer oxydoreduzierbaren Substanz in einer Flüssigkeit, welche einen Sensor (21) mit ebener Struktur, die mit Hilfe photolithographischer Techniken erhalten wurde, und einen Meßkreis (22) für die Messung der Stärke des elektrochemischen Stroms umfaßt, der durch den Sensor (21) erzeugt wird, wobei die Struktur
- ein isolierendes Substrat (23 bis 25),
- einen Elektrodensatz bestehend aus einer Arbeitselektrode (29), einer Gegenelektrode (30) und einer Referenzelektrode (31), wobei zumindest die Arbeitselektrode (29) auf dem Substrat (23 bis 25) angeordnet ist,
- eine Diffusionsmembran (32), die auf einen Teil des Substrats (23 bis 25) aufgebracht ist, und
- Anschlußmittel (26) zur Verbindung der Elektroden (29, 30, 31) mit dem Meßkreis (22), umfaßt,
- wobei die amperometrische Sensoreinrichtung dadurch gekennzeichnet ist, daß
- die Diffusionsmembran vollständig und ausschließlich den aktiven Leitungsteil der Arbeitselektrode (29) abdeckt und dabei über ihren gesamten Randbereich übersteht, und
- daß die Diffusionsmembran (32), die Referenzelektrode (31) und die Gegenelektrode (30) völlig freigelegt sind, damit ihre gesamte Oberfläche während des Betriebs der Einrichtung (20) mit der zu analysierenden Flüssigkeit in Kontakt steht.

2. Amperometrische Einrichtung nach Anspruch 1, dadurch gekennzeichnet, daß die Verbindungsmittel (26) wenigstens einen mit der Arbeitselektrode (29) verbundenen und in dem isolierenden Substrat auf einem Niveau unmittelbar unter der aktiven Oberfläche hiervon verlaufenden Leiter (26a, 26b) umfassen, der sich wenigstens über den Rand der Diffusionsmembran (32) hinaus erstreckt.

3. Amperometrische Einrichtung nach einem der Ansprüche 1 oder 2, dadurch gekennzeichnet, daß die Arbeitselektrode (29) eine im wesentlichen kreisähnliche Form besitzt.

4. Amperometrische Einrichtung nach Anspruch 3, dadurch gekennzeichnet, daß die Gegenelektrode (30) und/oder die Referenzelektrode (31) bogenförmig ist und konzentrisch um die Arbeitselektrode (29) herum positioniert ist.

5. Amperometrische Einrichtung nach einem der vorangehenden Ansprüche, dadurch gekennzeichnet, daß der Elektrodensatz (29, 30, 31) von einer Dichtung (33) umgeben ist, die am Substrat befestigt ist, und daß die Anschlußmittel Verbindungskontakte (26d, 26h, 26m) zum Meßkreis (22) besitzen, welche sich außerhalb des Umfangs der Dichtung (33) an der Oberseite des Substrats (23) befinden.

6. Amperometrische Einrichtung nach einem der Ansprüche 1 bis 5, dadurch gekennzeichnet, daß der Sensor (75) auf einer gedruckten Schaltung (74) montiert ist, die in einem Metallrohr (72) montiert ist, das eine Abschirmung bildet, und durch das ein Teil (71) der Anschlußmittel verläuft.

7. Amperometrische Einrichtung nach einem der Ansprüche 1 bis 5, dadurch gekennzeichnet, daß der Sensor (21) in einem Gehäuse (90) sitzt, das die Form eines genormten Kapsel gehäuses für integrierte Schaltungen besitzt.

8. Amperometrische Einrichtung nach einem der Ansprüche 1 bis 5 und 7, dadurch gekennzeichnet, daß sie einen zylindrischen Anschlußstutzen (92) mit zwei konzentrischen Leitungen (93, 94) umfaßt, die entsprechend dazu bestimmt sind, jeweils mit einem Ein- und einem Auslaß für die zu analysierende Flüssigkeit verbunden zu werden, und daß sie außerdem einen Träger (90) umfaßt, der so angeordnet ist, daß der Ansatzstutzen (92) durch eine der äußeren Leitungsenden (94) gegen die Dichtung (33) gedrückt wird.

9. Amperometrische Einrichtung nach einem der vorangehenden Ansprüche, dadurch gekennzeichnet, daß die Arbeitselektrode mehrere Elemente (41a bis 41d) aufweist, die auf dem Substrat (40) verteilt sind, und daß die Diffusionsmembran mehrere Elemente (42a bis 42d) aufweist, die jeweils die Elemente (41a bis 41d) der Arbeitselektrode überdecken, indem sie jeweils im Vergleich zu diesen Elektrodenelementen überstehen.

10. Amperometrische Einrichtung nach einem der vorangehenden Ansprüche, dadurch gekennzeichnet, daß die Arbeitselektrode (51) kammförmig ist.

## Claims

1. Amperometric sensor device, for measuring the content of an oxygen reducible substance in a liquid, having in combination a sensor (21) having a planar structure obtained by photolithographic techniques and a circuit (22) for measuring the intensity of the electrochemical current generated by said sensor (21), said structure comprising
- an insulating substrate (23 to 25)
- a set of electrodes composed of at least one working electrode (29), one counter electrode (30) and one reference electrode (31), at least said working electrode (29) being disposed on said insulating substrate (23 to 25),
- a diffusion membrane (32) deposited on at least part of said substrate (23 to 25), and
- connection means (26) to connect said electrodes (29, 30, 31) to said measuring circuit (22),
said amperometric sensor device being characterised in that
- said diffusion membrane entirely and solely covers the active conductive part of said working electrode (29) with an overlap over its entire peripheral zone, and,
- in that said diffusion membrane (32), said reference electrode (31) and said counter electrode (30) are entirely exposed so that, when said device (20) is functioning, it is in contact over its entire surface with the liquid to be analysed.

2. Amperometric device according to claim 1, characterised in that said connection means (26) have at least one conductor (26a, 26b) connected to said working electrode (29) and passing into said insulating substrate at a level subjacent to the active surface thereof, by extending at least beyond the periphery of said diffusion membrane (32).

3. Amperometric device according to either one of claims 1 and 2, characterised in that the working electrode (29) has a substantially circular shape.

4. Amperometric device according to claim 3, characterised in that said counter electrode (30) and/or said reference electrode (31) are arcuate in form and disposed concentrically about the working electrode (29).

5. Amperometric device according to any one of the preceding claims, characterised in that said set of electrodes (29, 30, 31) is surrounded by a packing (33) fixed to said substrate and in that said connection means comprise liaison contacts (26d, 26h, 26m) with said measuring circuit (22) situated outside the perimeter of said packing (33) at the surface of said substrate (23).

6. Amperometric device according to any one of claims 1 to 5, characterised in that said sensor (75) is mounted on a printed circuit (74) mounted in turn in a metal tube (72) forming a casing and traversed by part (71) of the connection means.

7. Amperometric device according to any one of claims 1 to 5, characterised in that said sensor (21) is disposed in a housing (90) having the shape of an standardised encapsulation housing for integrated circuits.

8. Amperometric device according to any one of claims 1 to 5, and 7, characterised in that it comprises a cylindrical tube (92) having two concentric channels (93, 94) designed respectively to communicate with one inlet and one outlet of the liquid to be analysed and in that it also comprises a support (90) arranged to hold said tube (92) abutting against said packing (33) by one of the extremities of its outer channel (94).

9. Amperometric device according to any one of the preceding claims, characterised in that said working electrode has several elements (41a to 41d) distributed on said substrate (40) and in that said diffusion membrane has several elements (42a to 42d) covering respectively the elements (41a to 41d) of said working electrode by individually overlapping in relation to these electrode elements.

10. Amperometric device according to any one of the preceding claims, characterised in that said working electrode (51) has the shape of a comb.
